# EUROPEAN PATENT SPECIFICATION

(11) **EP 1 677 908 B1**
(45) Date of publication and mention of the grant of the patent: **29.08.2007**
(21) Application number: 04821614.7
(22) Date of filing: 04.10.2004
(51) Int. Cl.: B01J 29/00, C08K 9/08

(54) **COMPOSITE OF EXFOLIATED CLAY IN SOOT AND THE PREPARATION THEREOF**
VERBUND VON EXFOLIERTEM TON IN SOOT UND HERSTELLUNGSVERFAHREN DAFÜR
COMPOSITE D'ARGILE EXPANSEE DANS LA SUIE ET SON PROCEDE DE PREPARATION

(30) Priority: 10.10.2003 US 510211 P; 21.07.2004 US 589684 P
(43) Date of publication of application: 12.07.2006
(73) Proprietor: Dow Global Technologies Inc., Midland, MI 48674 (US)
(72) Inventor: BALIJEPALLI, Sudhakar, Midland, MI 48640 (US); SIMMONS, Daniel, A., Bay City, MI 48706 (US); TANG, Houxiang, Midland, MI 48642 (US); GRAF, Irina, V., G., Midland, MI 48640 (US); SWEENEY, Jeffrey, D., Midland, MI 48640 (US); WILSON, Tricia, L., Bay City, MI 48706 (US); NEHME, Michael, Y., Cross Lanes, WV 25313 (US)
(74) Representative: Raynor, John
(86) International application number: PCT/US2004/032535
(87) International publication number: WO 2005/087854

(56) References cited:
- WO-A-97/31057
- US-A- 5 583 082

## Description

### Background of the Invention

Reinforcing fillers such as carbon blacks, glass fibers, clays, calcium carbonate, calcium silicates, silica, alumina, and zeolites are widely used to enhance mechanical, thermal, and barrier properties of polymers and to reduce compounding costs. Reinforcement increases the hardness and modulus, abrasion and tear resistance, and fatigue and aging properties of polymers. Moreover, fillers may impart functional attributes that enhance other properties of polymers such as UV, moisture, and thermal stability, as well as fire retardancy.

Carbon blacks find particular utility as fillers in elastomers. For example, they are known to increase tensile strength and resistance to tear of tires. Carbon blacks are desirable due to their ease of preparation and their compatibility with organic polymers. Most carbon blacks are produced from partial combustion of natural gas or oil and result in spherical particles containing graphitic plates. The particles themselves are linked to form a "necklace" like aggregate of particles that are referred to as "structured blacks," which have higher surface area and greater anisotropy - resulting in higher elastomer modulus and stiffness - than spherical fillers. On the other hand, high surface area carbon blacks are difficult to disperse; moreover even where adequate dispersion is achieved, detrimental effects such as reduced toughness of elastomers is noted. (Refer Carbon Black, Eds: J. B. Donnet, R. P. Bansal and M. J. Wang, Marcel Dekker Inc. 1993).

High aspect ratio multilamellar clays, which typically have at least two to three times the hardness of carbon blacks, are also known as a reinforcing filler. Clays can enhance polymeric mechanical properties such as modulus and yield strength when delaminated and dispersed in the polymeric matrix. However, unlike carbon blacks, the typically hydrophilic clay is not inherently compatible with a typically hydrophobic organic polymer. Consequently, efficient delamination and dispersion requires that a clay be pretreated with a compatibilizing reagent, usually a silane or acid coupling agent or a quaternary ammonium salt. (See "Polymer-Clay Nanocomposites", Eds. T. J. Pinnavaia, G. W. Beal, Wiley Series in Polymer Science, 2001). As disclosed in U.S. 4,889,885 and 4,810,734, silane pretreatment swells and to some extent separates the clay layers, thereby promoting dispersion of the clay with reduced stacking into the elastomer. Nevertheless, while mechanical properties of the elastomer are improved through increasingly efficient delayering of the clay, this improvement is offset by an undesirable plasticization resulting from compatibilization.

The ideal filler for an elastomer, particularly for the tire industry, would improve mechanical properties while providing other benefits such as low rolling resistance, lower abrasion, and higher weather resistance. Although the state-of -the-art carbon blacks offer a low cost means of providing these property enhancements, they require non-renewable raw materials. Accordingly, it would be desirable to find a property enhancing filler material that is advantageously derivable from renewable resources, that is inexpensive to make, and is easy to use.

### Summary of the Invention

Accordingly, the present invention addresses a need by providing, in a first aspect, a composite comprising at least one exfoliated clay pillared in a carbonized matrix, wherein the exfoliated clay exhibits a number average platelet stacking of not greater than 100 platelets by X-ray diffraction.

In a second aspect, the present invention relates to a method of forming a composite comprising the steps of a) dispersing and exfoliating a multilamellar clay in a matrix containing a carbonizable organic material to form a precursor composite, wherein the matrix has a viscosity sufficient to inhibit collapse of the dispersed and exfoliated clay; and b) heating the precursor composite under such conditions to form a pillared dispersion of the exfoliated clay in a carbonized matrix.

The present invention offers an inexpensive way to improve mechanical properties of a polymer using a material that is derivable from renewable sources of energy.

### Brief Description of Drawings

Figs. 1a, 2a, and 3a are XRD spectra of clay-soot composites.
Figs. 1b, 2b, and 3b are TEM photographs of clay-soot composites.

### Detailed Description of the Invention

The composition of the present invention can be prepared by first dispersing and exfoliating at least one clay in a matrix in the presence of shear to create a composite precursor. The clay can be naturally occurring, for example, one or more of vermiculites, micas, and smectites such as hectorites, saponites, and montmorillonites, or synthetic, for example, one or more of hydrotalcites, synthetic hectorites, and fluorohectorites. Examples of suitable commercially available clays include Laponite^{™} hydrous magnesium silicate clays (a trademark of Rockwood Additives Ltd. Corp.), and Cloisite^{™} sodium montmorillonite clays (a trademark of Southern Clay Products, Inc.). The clay can be modified, for example, with an organic quaternary ammonium salt, or unmodified; it is preferred to use unmodified clay.

The clay may be a high aspect ratio clay, a low aspect ratio clay, or a combination thereof. As used herein, the term "aspect ratio" refers to the ratio of the largest dimension in the xy plane of a single clay platelet to the thickness of the multilamellar plates in the z-direction. As used herein, the term "low aspect ratio clay" refers to a clay having an aspect ratio in the range of about 10:1 to about 50:1. As used herein, the term "high aspect ratio clay" refers to a clay having an aspect ratio in the range of about 100:1 to about 1000: 1.

Moreover, the word "clay" is used herein to mean one or more types of clay, unless stated otherwise. For example, the pillared exfoliated clay can be a combination of one or more pillared exfoliated low aspect ratio clays and one or more pillared exfoliated high aspect ratio clays, or a combination of one or more acid etchable clays and one or more clays that are resistant to acid etching, etc.

The matrix is preferably gelling agent or a carbonizable polymer. The gelling agent is or contains a carbonizable organic material, that is, an organic material capable of forming a carbonized matrix (soot), and is characterized by having a dielectric constant of preferably at least about 5, more preferably at least about 10, and most preferably at least 20, and a viscosity sufficiently high to inhibit collapse of the exfoliated clay; preferably the gelling agent has an intrinsic viscosity of at least 100 cps, more preferably at least 1000 cps, and most preferably at least 5000 cps. Suitable gelling agents include low vapor pressure hydrophilic organic solvents such as polyols including polyether polyols; polyalkylene oxides such as polyethylene oxides, polypropylene oxides, polybutylene oxides and blends and copolymers thereof; and solutions of one or more solids dissolved in a liquid carrier such as aqueous solutions of biorenewable materials including starches, gelatins, sugars, cyclodextrins, and cellulose ethers such as methyl cellulose, ethyl cellulose, and hydroxypropyl methyl cellulose, and combinations thereof. Aqueous solutions of biorenewable materials are preferred.

The concentration of clay in the organic component of the gelling agent is application dependent but is preferably not less than about 2, and more preferably not less than about 5, and most preferably not less than about 10 weight percent; and not more than about 50, more preferably not more than 40 weight percent, based on the weight of the clay and the gelling agent.

Other reagents may be added in the first step of the method of the present invention. Examples of such reagents include clay modifiers such as silane coupling agents or quaternary ammonium salts to produce an organically modified clay. Other reagents include fire retardant agents such sodium polyphosphate, and inorganic pigments such as titanium oxide. However, the method of the present invention can be carried out, and is preferably carried out, in the absence of such agents and modifiers.

As suggested above, it is also possible and, in some cases, desirable to disperse into the gelling agent a combination of clays that differ in their aspect ratio. Thus, at least one low aspect ratio clay such as a saponite or a hectorite can be dispersed into the gelling agent along with at least one high aspect ratio clay such as a montmorillonite, a fluoromica, a fluorohectorites, or a magadiite. This combination is advantageous because a low aspect ratio clay that is exfoliated in the gelling agent tends to remain in the exfoliated state while the high aspect ratio clay tends to at least partially collapse; however, when combined, the low aspect ratio clay acts as a spacer to prevent collapse of the high aspect ratio clay. On the other hand, the low aspect ratio, by itself, does not provide as good a reinforcement as does the high aspect ratio clay. Thus, the combination of at least one low aspect ratio clay and at least one high aspect ratio clay provides optimal mechanical properties. The weight-to-weight proportion of the high aspect ratio clay to the low aspect ratio clay is preferably in the range of from about 1:1, more preferably from about 1:2, and most preferably to about 1:3, to about 1:100, more preferably to about 1:50, and most preferably to about 1:10.
A highly porous carbonized composite can be prepared by dispersing an acid etchable clay into the matrix, carbonizing the matrix to form the composite, then grinding the composite to form a micron- or submicron-sized pillared dispersion. Examples of acid etchable clays include saponites, hectorites, fluoromicas, and fluorohectories. The ground dispersion can then be contacted with a solvent for the clay to dissolve and extract at least part of the clay, thereby leaving voids (pores) where the clay used to be. Suitable solvents include acids such as HF, HCl, HBr, HI, H₃PO₄, HNO₃, H₂SO₄, and combinations thereof.

It is also possible and, in some cases, desirable to disperse into the matrix a combination of clays that differ in their responses to acid etching. For example, any of the aforementioned acid etchable clays can be dispersed into the matrix along with a clay that is resistant to acid etching such as montmorillonites and magdiites. A highly porous platelet-reinforced composite can be prepared by dispersing into the matrix at least one acid-etchable clay and at least one clay resistant to acid etching; then, after the carbonizing and grinding steps, at least some, preferably substantially all of the acid-etchable clay platelets can be removed while leaving at least some, preferably substantially all of the acid-resistant clay platelets in the composite. This method of creating a reinforced high surface area composite allows for much greater control of pore density and reinforcement as compared to the method where only an acid etchable clay is dispersed in the matrix. Where both etchable and non-etchable clays are used, the weight-to-weight proportion of the etchable clay to the non-etchable clay is preferably in the range of from about 10:1 to about 1:10 .

The clay is preferably dispersed in the gelling agent under high shear, for example, by spinning, stirring, or extruding, with spinning and extruding being preferred. Shear rates vary depending on the type of shear mode used. For example, when spinning is used, the preferred spinning rate (shear rate in parenthesis) is preferably not less than 1200 rpm (20 s⁻¹), more preferably not less than 2400 rpm (40 s⁻¹), and preferably not more than 12000 rpm (200 s⁻¹), and more preferably not more than 6000 rpm (100 s⁻¹). When extrusion is used, the shear rate is preferably not less than 200 s⁻¹ more preferably not less than 500 s⁻¹, and preferably, not more than 1500 s⁻¹, and more preferably not more than 1000 s⁻¹.

The gelling agent in the precursor composite "pillars" the clay, that is, the agent both separates the clay platelets and prevents their collapse to the original multilamellar structure. At this stage, the average number stacking of layers of the clay in the precursor composite, as determined by X-ray diffraction (XRD), has been reduced to not greater than 100, preferably not greater than 50, more preferably not greater than 20, and most preferably not greater than 10 layers per stack. This is particularly true for low aspect ratio clays; high aspect ratio clays tend to be more difficult to exfoliate than low aspect ratio clays.

In a second step, the precursor composite is heated under such conditions form a dispersion of exfoliated clay pillared in a carbonized matrix, preferably without converting the organic component of the precursor composite completely to graphite. The precursor composite is heated to a temperature of preferably at least 200° C, and more preferably at least 300° C, and preferably not greater than 700° C, more preferably not greater than 600° C, and for a time sufficient to achieve the desired degree of carbonization, preferably in the range of from about 1 to about 120 minutes. As used herein, the term "carbonized matrix" refers to the remnant (soot) resulting from a loss of weight (carbonization) of the organic portion of the gelling agent. The degree of weight loss is preferably at least about 30, more preferably at least about 40, and most preferably at least about 50; and preferably less than about 90, more preferably less than about 80 weight percent of the organic component of the gelling agent.

Conversion to soot can be accomplished by any suitable method including spray pyrolysis and bulk pyrolysis, and is advantageously carried out in the presence of a carrier gas such as air, argon, or nitrogen. The pyrolyzed sample, which is now a composite, is preferably ground to form a micron- or submicron-sized pillared dispersion of the exfoliated clay in a carbonized matrix. This composite is not merely a physical mixture of clay and soot - rather, the exfoliated clay is embedded in the soot, that is, it cannot be separated from the carbonized matrix by sieving. The concentration of the exfoliated clay in the carbonized matrix is application dependent but generally varies from about 5 to 90 weight percent based on the weight of the clay and the carbonized matrix. Surprisingly, the clay can be emcdded in an exfoliated state in the soot without ancillary materials such as large metal polycations or polyoxometalates or without having to organically modify the clay. That is to say, the preferred composite consists essentially of exfoliated clay and the carbonized matrix.

As used herein, exfoliation refers to a separation of the multilamellar clay into smaller stacks, preferably individual platelets. A high degree of separation can readily be achieved by the method of the present invention as determined by TEM (transmission electron microscopy). The number average platelet stacking - readily understood by a person of ordinary skill in the art to be calculated from the peak width at half maximum of the basal reflection of the clay by XRD - is not greater than 100 platelets, preferably not greater than 50 platelets, more preferably not greater than 20 platelets, and most preferably not greater than 10 platelets per stack.

The high surface area carbonized matrix can be used as a membrane for gas-gas, gas-liquid, or liquid-liquid separations or as an additive to promote ignition resistant.

It may be desirable to heat the dispersion or composite of the clay to a temperature beyond where mere carbonization of the gelling agent takes place; that is to say, it is possible to completely volatilize the gelling agent to create a ceramic foam that comprises exfoliated crystals distributed in a silica matrix. In this aspect of the present invention, the clay is preferably converted to soot, then heated to a temperature sufficient to form a porous ceramic foam. Preferably, the soot is first ground a micron- or submicron sized dispersion, then placed in a die then heated to a temperature in the range of from about 800° C, more preferably from about 1000° C to about 1500° C.

Yet another way of making the ceramic foam is to exfoliate clay in an aqueous-based poragen, preferably a latex, then a) remove water, b) shape the dried powder in a die, and c) fire the material up to temperature sufficient to make the ceramic foam. An example of a suitable latex is a polystyrene latex.

The composite of the present invention is useful as an additive in a variety of materials to improve a) mechanical properties such as modulus and toughness; b) barrier properties to moisture, oxygen, and acid; c) ignition resistance; d) paintability and electrostatic dissipation; e) aging properties; f) UV resistance. Suitable materials include polymers such as thermoplastics (including elastomers) and thermosets. The composite reinforced material can be used in a variety of applications including coatings, adhesives, foams, automotive (tires), and building construction.

The following examples are for illustrative purposes only and are not intended to limit the scope of the invention.

### Example 1 - Composite of Laponite^{™} Clay in Soot

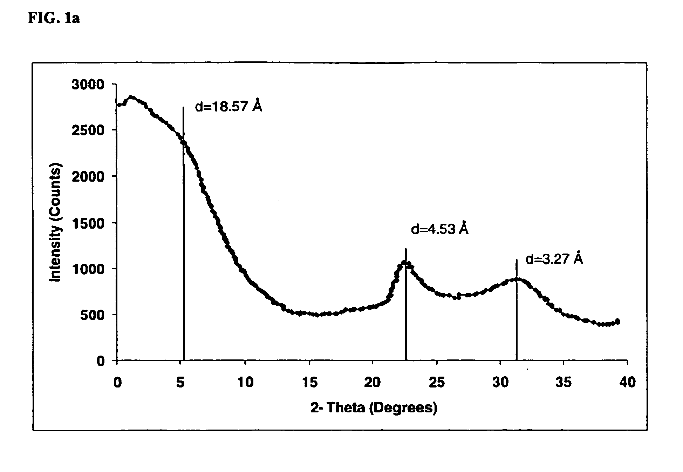

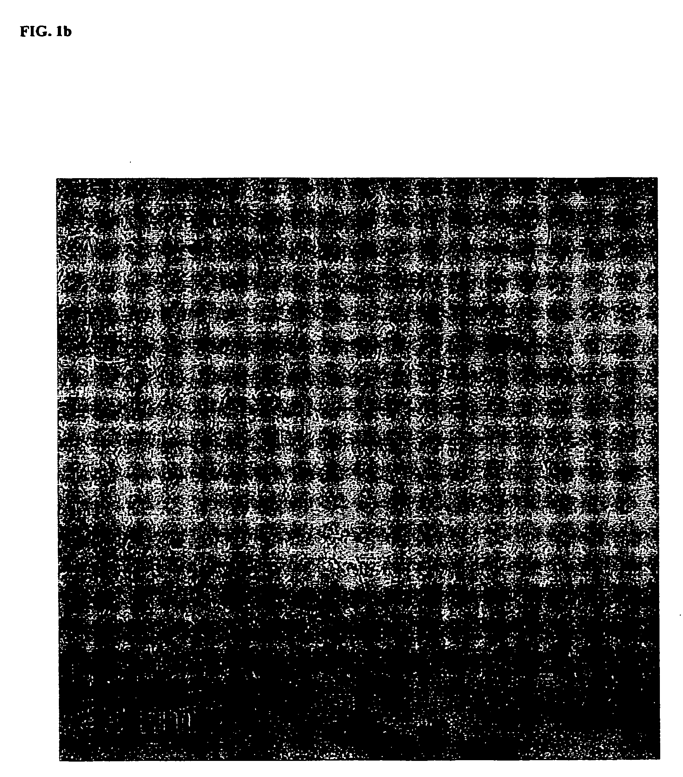

Unmodified Laponite^{™} clay (2.5 g), a water soluble starch (10.0 g), and water (35.0 g) were blended together in a cup, which was then loaded into a SpeedMixer DAC 150-FVZ-K spinner (available from FlackTek, Inc.) and spun at 3000 rpm for 15 minutes to form a gel. A sample of this gel (26.03 g) was then transferred to an aluminum pan and heated at 400° C in nitrogen for 20 minutes to form a clay-soot composite (2.86 g, 66.7 weight % clay, based on the weight of soot and clay). XRD spectroscopy, illustrated in Fig. 1a shows number of layers per stack to be about 2, indicating complete, or nearly complete exfoliation of the clay in the soot. TEM analysis of the sample, illustrated in Fig. 1b, confirms substantially complete exfoliation of the clay.

### Example 2 - Composite of Higher Loading Laponite^{™} Clay in Soot

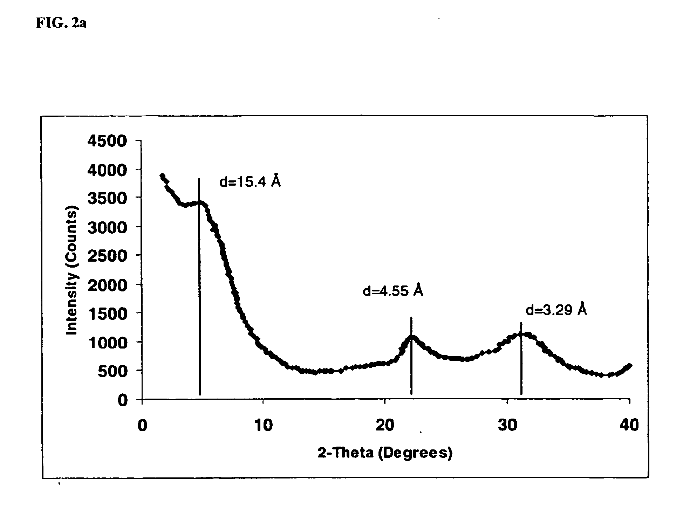

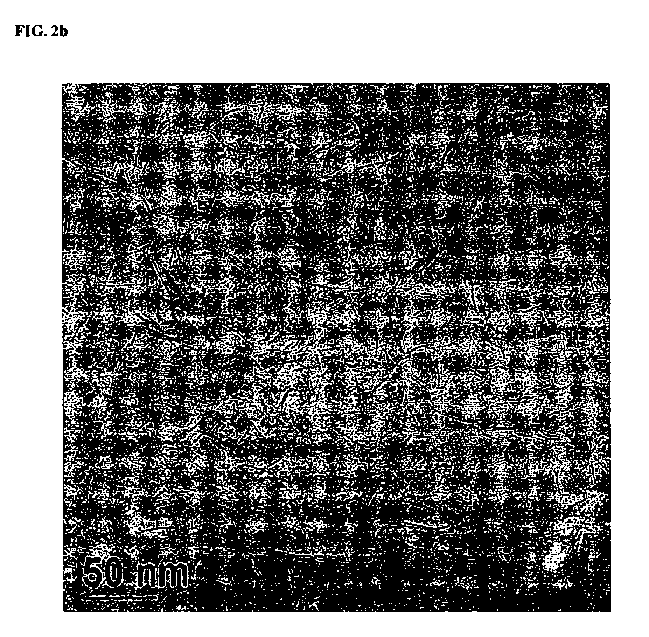

The procedure described in Example I is followed except that the proportions of starting materials were Laponite^{™} clay (7.5 g, available from Continental Clay Co.), water soluble starch (12.5 g), and water (30.0 g). The gel in this example (28.60 g) was converted to the clay-soot composite (6.18 g, 69.5 weight % clay, based on the weight of soot and clay). XRD spectroscopy of this composite, illustrated in Fig. 2a shows number of layers per stack to be about 4, and TEM, illustrated in Fig. 2b, confirms substantial clay exfoliation.

### Example 3 - Composite of Cloisite^{™} Na⁺ Clay in Soot

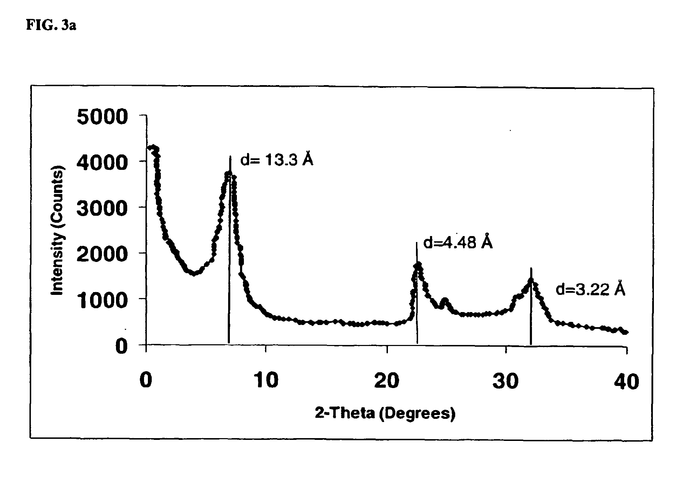

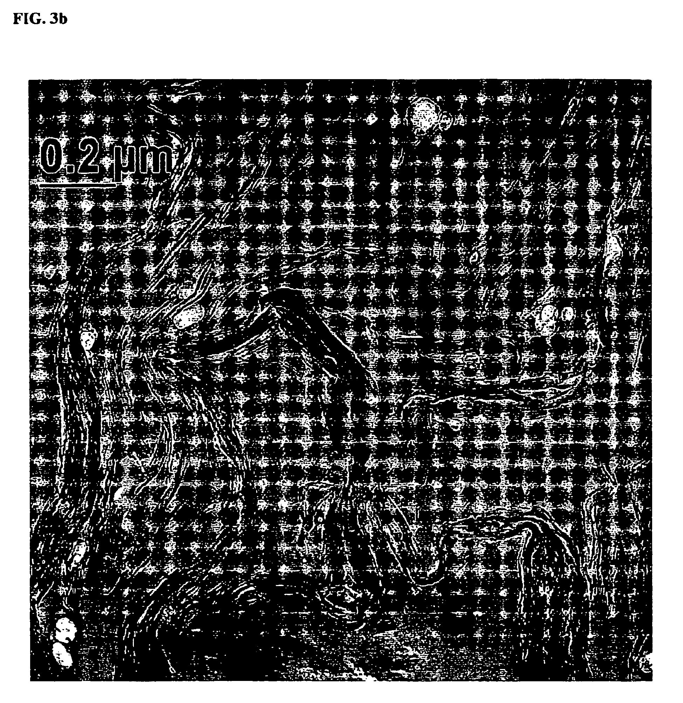

The procedure described in Example 2 is followed except that the clay was Cloisite^{™} Na^{c} clay (available from Continental Clay Co.). The gel in this example (23.57 g) was converted to the clay-soot composite (4.78 g, 74.0 weight % clay, based on the weight of soot and clay). As was the case for the previous examples, XRD spectroscopy of this composite, illustrated in Fig. 3a shows number of layers per stack to be about 9, and TEM, illustrated in Fig. 3b, confirms substantial clay exfoliation.

### Example 4 - Preparation of Soot Using Two Clay Types

Laponite clay (0.5 g), Cloisite Na⁺ clay (1.0 g), and starch (8.5 g) were combined and dried *in vacuo* at 90° C for 24 hours. The mixture was loaded in a plastic bottle and milled for 72 hours, then transferred to a cup along with DI water (40.0 g). The contents were spun at 3000 rpm for 10 minutes, after which a gel was obtained. A portion of the clay was carbonized in air at 400° C for 45 minutes. XRD data showed complete or near complete exfoliation of the Laponite clay and an average stacking of 8 layers/stack for the Cloisite Na⁺ clay.

### Example 5 - Preparation of Soot Using Two Clay Types

The procedure from Example 4 was repeated except that 3.5 g of Laponite clay was used. In this case, the XRD data showed an average stacking of 2 layers/stack for the Cloisite Na⁺ clay as well as complete exfoliation for the Laponite clay.

### Example 6 - Preparation of Clay Soot with Increased Surface Area

Cloisite Na⁺ clay (1.0 g), Laponite clay (3.5 g), corn starch (19 g), and DI water (40 g) were placed into a mixing cup and sheared at 3000 rpm for 15 min to form a gel. The gel was spread onto tin sheets and fired at 320° C for 35 min. The clay to soot ratio was found to be about 1:1. The material was ground and milled to obtain a material with a number average particle size of about 5 µm. The milled material was mixed with an equal volume of 37% HCl and heated to 60° C with sonication. Material was centrifuged out of the suspension and HCl addition, heating, and sonication was repeated two more times for a total of three washes. The etched clay soot material was centrifuged and the HCl decanted, and DI water was added and centrifuged out until the sample was no longer acidic. The material was dried *in vacuo* at 90° C and ground to an average particle size below 100 µm, determined by sieving. BET surface areas of both unetched and etched samples were determined using Micromeritics Gemini 2360 Analyzer and a Micromeritics FlowPrep 060 Analyzer. Samples of about 0.5 g were dried at 65° C in the FlowPrep 060 Analyzer under a purge of nitrogen for 1.5 h. The samples were removed and placed into the Gemini 2360 Analyzer where surface areas were determined. Two runs of the unetched samples showed an average surface area of 4.3 m²/g (Run 1 = 4.3; Run 2 = 4.2), while two runs of the etched samples showed an average surface area of 14.1 m²/g (Run 1 = 14.2; Run 2 = 13.9).

### Example 7 - Preparation of Clay Foam

### A. Preparation of Soot Using Two Clay Types

A 70:30 loading of clay to starch was prepared as follows: Water (32 g), starch (14.4 g), Cloisite Na⁺ clay (7.8 g), and Somasif fluorohectorite (25.8 g, available from UnicoOP, Tokyo, Japan) were combined in a speedmixer for 10 minutes at 3000 rpm. Once mixed, the sample was transported to tin foil and pressed at 10 tons of pressure to flatten the material. The material was burned at 320 °C for one hour to form a soot, which was found to constitute 9% of the sample. The sample was ground for 2 minutes using a coffee grinder.

### B. Preparation of Ceramic

HPMC powder (hydroxypropylmethyl cellulose, 0.4 g) was dissolved in boiling water (10 mL D1), whereupon additional water (10 mL DI) was added at room temperature (20° C) with stirring to make a homogeneous solution. Then, the solution was added to the clay soot prepared in step A. (19.6 g) and the blend was mixed for 5 minutes in a speedmixer at 3000 rpm. The sample was then transported to a beaker and placed into a vacuum oven at 95° C to dry overnight. The dried sample was then ground and shaped using a die. The sample was pressed using Carver Laboratory Press (5000 lbs) and shaped, then fired in a furnace at 1000° C to incinerate the organic materials and sinter the clays. The heating profile for the sample was: 20° C - 1000° C in 100 minutes; held at 1000° C for 20 hours; 1000° C - 20° C in 2-3 hours. The average pore size of the sample was found to be 1.06 µm; the bulk density was found to be 1.64 g/mL; the apparent density was found to be 2.53 g/mL; and the percent porosity was found to be 35.1%.

## Claims

1. A composite comprising at least one exfoliated clay pillared in a carbonized matrix, wherein the exfoliated clay exhibits a number average platelet stacking of not greater than 100 platelets by X-ray diffraction.

2. The composite of Claim 1 the number average platelet stacking is not greater than 10.

3. The composite of Claim 1 wherein the clay includes at least one low aspect ratio clay having an aspect ratio in the range of from about 10:1 to about 50:1 and at least one high aspect ratio multilamellar clay having an aspect ratio in the range of from about 100:1 to about 1000:1.

4. The composite of Claim 3 wherein the low aspect ratio clay is selected from the group consisting of exfoliated saponites and hectorites; and the high aspect ratio clay is selected from the group consisting of exfoliated montmorillonites, fluoromicas, fluorohectorites, and magadiites.

5. The composite of Claim 1 which is dispersed in a polymer.

6. A method of forming a composite comprising the steps of a) dispersing and exfoliating a multilamellar clay in a matrix containing a carbonizable organic material to form a precursor composite, wherein the matrix has a viscosity sufficient to inhibit collapse of the dispersed and exfoliated clay; and b) heating the precursor composite under such conditions to form a pillared dispersion of the exfoliated clay in a carbonized matrix.

7. The method of Claim 6 wherein the matrix is a gelling agent having a dielectric constant of at least 5.

8. The method of Claim 7 wherein the gelling agent is an aqueous solution of one or more solids selected from the group consisting of starches, cyclodextrins, gelatins, sugars, and cellulose ethers.

9. The method of Claim 8 wherein the gelling agent is an aqueous solution of a starch.

10. The method of Claim 6 wherein the matrix is a polymer selected from the group consisting of polyether polyols and polyalkylene oxides.

11. The method of Claim 6 which further includes after step (b) the step (c) grinding the composite to form a micron- or submicron-sized pillared dispersion of the exfoliated clay in the carbonized matrix.

12. The method of Claim 11 which further includes after step (c) the step of heating the pillared dispersion to sufficient temperature to burn off the carbonized matrix and to form a porous ceramic foam.

13. The method of Claim 6 wherein in step (b) the precursor composite is heated to a temperature of at least 300° C, and not greater than 600° C.

14. The method of Claim 7 wherein the precursor composite is heated under such conditions to achieve a weight loss of at least about 50 and not more than about 90 weight percent of the carbonizable organic material of the gelling agent.

15. The method of Claim 11 which further includes after step (c) the step of dissolving the clay in a solvent for the clay and extracting at least some of the clay from the composite to form a porous carbonized composite matrix.

16. The method of Claim 15 wherein the solvent is acidic and wherein the clay includes at least one acid etchable clay and at least one clay that is resistant to acid etching.

17. The method of Claim 16 wherein the at least one acid etchable clay is selected from the group consisting of saponites, hectorites, fluoromicas, and fluorohectorites; and the at least one clay that is resistant to acid etching is selected from the group consisting of montmorillonites and magadiites.

18. The method of Claim 17 which includes the step of dispersing the porous carbonized matrix in a polymer.

19. The method of Claim 6 wherein the clay includes at least one low aspect ratio clay having an aspect ratio in the range of from about 10:1 to about 50:1 and at least one high aspect ratio multilamellar clay having an aspect ratio in the range of from about 100: 1 to about 1000:1.

20. The method of Claim 19 wherein the low aspect ratio multilamellar clay is selected from the group consisting of saponites and hectorites; and the high aspect ratio multilamellar clay is selected from the group consisting of montmorillonites, fluoromicas, fluorohectorites, and magadiites.

## Patentansprüche

1. Ein Verbundstoff, enthaltend wenigstens einen expandierten Ton in Säulenform in einer carbonisierten Matrix, wobei der expandierte Ton eine zahlenmittlere Plättchenstapelung von nicht mehr als 100 Plättchen ermittelt durch Röntgenbeugung aufweist.

2. Der Verbundstoff nach Anspruch 1, wobei die zahlenmittlere Plättchenstapelung nicht größer als 10 ist.

3. Der Verbundstoff nach Anspruch 1, wobei der Ton wenigstens einen Ton mit einem niedrigen Aspektverhältnis, welcher ein Aspektverhältnis im Bereich von ungefähr 10:1 bis ungefähr 50:1 hat, und wenigstens einen multilamellaren Ton mit einem hohen Aspektverhältnis, welcher ein Aspektverhältnis im Bereich von ungefähr 100:1 bis ungefähr 1000:1 hat, umfasst.

4. Der Verbundstoff nach Anspruch 3, wobei der Ton mit niedrigem Aspektverhältnis ausgewählt ist aus der Gruppe bestehend aus expandierten Saponiten und Hectoriten; und der Ton mit hohem Aspektverhältnis ausgewählt ist aus der Gruppe bestehend aus expandierten Montmorilloniten, Fluorglimmern, Fluorhectoriten und Magadiiten.

5. Der Verbundstoff nach Anspruch 1, welcher in einem Polymer dispergiert ist.

6. Ein Verfahren zum Bilden eines Verbundstoffs, umfassend die Schritte a) Dispergieren und Expandieren eines multilamellaren Tons in einer Matrix, die ein carbonisierbares organisches Material enthält, um einen Vorläuferverbundstoff zu bilden, wobei die Matrix eine Viskosität hat, die ausreicht, um das Kollabieren des dispergierten und expandierten Tons zu verhindern; und b) Erwärmen des Vorläuferverbundstoffs unter solchen Bedingungen, um eine säulenförmige Dispersion des expandierten Tons in einer carbonisierten Matrix zu bilden.

7. Das Verfahren nach Anspruch 6, wobei die Matrix ein Geliermittel mit einer Dielektrizitätskonstante von wenigstens 5 ist.

8. Das Verfahren nach Anspruch 7, wobei das Geliermittel eine wässrige Lösung eines oder mehrerer Feststoffe ist, ausgewählt aus der Gruppe bestehend aus Stärken, Cyclodextrinen, Gelatinen, Zuckern und Cellulosethern.

9. Das Verfahren nach Anspruch 8, wobei das Geliermittel eine wässrige Lösung einer Stärke ist.

10. Das Verfahren nach Anspruch 6, wobei die Matrix ein Polymer ist, ausgewählt aus der Gruppe bestehend aus Polyetherpolyolen und Polyalkylenoxiden.

11. Das Verfahren nach Anspruch 6, welches außerdem nach Schritt (b) den Schritt (c), das Mahlen des Verbundstoffs, um eine säulenförmige Dispersion im Mikrometer- oder Submikrometergrößenbereich des expandierten Tons und der carbonisierten Matrix zu bilden, einschließt.

12. Das Verfahren nach Anspruch 11, welches außerdem nach Schritt (c) den Schritt des Erwärmens der säulenförmigen Dispersion auf eine ausreichende Temperatur, um die carbonisierte Matrix abzubrennen und einen porösen keramischen Schaum zu bilden, einschließt.

13. Das Verfahren nach Anspruch 6, wobei in Schritt (b) der Vorläuferverbundstoff auf eine Temperatur von wenigstens 300°C und nicht mehr als 600°C erwärmt wird.

14. Das Verfahren nach Anspruch 7, wobei der Vorläuferverbundstoff unter solchen Bedingungen erwärmt wird, dass ein Gewichtsverlust von wenigstens ungefähr 50 und nicht mehr als ungefähr 90 Gew.-% des carbonisierbaren organischen Materials des Geliermittels erhalten wird.

15. Das Verfahren nach Anspruch 11, welches außerdem nach Schritt (c) den Schritt enthält, dass der Ton in einem Lösungsmittel für den Ton gelöst wird und wenigstens etwas des Tons aus dem Verbundstoff extrahiert wird, um eine poröse carbonisierte Verbundmatrix zu bilden.

16. Das Verfahren nach Anspruch 15, wobei das Lösungsmittel sauer ist und wobei der Ton wenigstens einen durch Säure ätzbaren Ton und wenigstens einen Ton, der gegenüber einer Säureätzung resistent ist, enthält.

17. Das Verfahren nach Anspruch 16, wobei der wenigstens eine durch Säure ätzbare Ton ausgewählt ist aus der Gruppe bestehend aus Saponiten, Hectoriten, Fluorglimmern und Fluorhectoriten; und der wenigstens eine Ton, der gegenüber einer Säureätzung resistent ist, ausgewählt ist aus der Gruppe bestehend aus Montmorriloniten und Magadiiten.

18. Das Verfahren nach Anspruch 17, welches den Schritt des Dispergierens der porösen carbonisierten Matrix in einem Polymer einschließt.

19. Das Verfahren nach Anspruch 6, wobei der Ton wenigstens einen Ton mit einem niedrigen Aspektverhältnis mit einem Aspektverhältnis im Bereich von ungefähr 10:1 bis ungefähr 50:1 und wenigstens einen multilamellaren Ton mit einem hohen Aspektverhältnis mit einem Aspektverhältnis im Bereich von ungefähr 100:1 bis ungefähr 1000:1 einschließt.

20. Das Verfahren nach Anspruch 19, wobei der multilamellare Ton mit niedrigem Aspektverhältnis ausgewählt ist aus der Gruppe bestehend aus Saponiten und Hectoriten; und der multilamellare Ton mit hohem Aspektverhältnis ausgewählt ist aus der Gruppe bestehend aus Montmorilloniten, Fluorglimmern, Fluorhectoriten und Magadiiten.

## Revendications

1. Composite comprenant au moins une argile expansée, soutenue en colonnes au sein d'une matrice carbonisée, dans lequel le nombre moyen de feuillets par empilement de l'argile expansée, déterminé par diffraction de rayons X, ne vaut pas plus de 100 feuillets.

2. Composite conforme à la revendication 1, dans lequel le nombre moyen de feuillets par empilement ne vaut pas plus de 10.

3. Composite conforme à la revendication 1, dans lequel l'argile renferme au moins une argile à faible rapport de forme, dont le rapport de forme se situe dans la gamme allant à peu près de 10/1 à 50/1, et au moins une argile multilamellaire à fort rapport de forme, dont le rapport de forme se situe dans la gamme allant à peu près de 100/1 à 1000/1.

4. Composite conforme à la revendication 1, dans lequel l'argile à faible rapport de forme est choisie dans l'ensemble formé par les hectorites et saponites expansées, et l'argile à fort rapport de forme est choisie dans l'ensemble formé par les montmorillonites, fluoromicas, fluorohectorites et magadiites expansés.

5. Composite conforme à la revendication 1, qui se trouve dispersé dans un polymère.

6. Procédé de formation d'un composite, comportant les étapes suivantes :
a) disperser et expanser une argile multilamellaire dans une matrice contenant une matière organique carbonisable, de manière à en faire un composite précurseur, ladite matrice étant suffisamment visqueuse pour empêcher l'argile dispersée et expansée de s'effondrer sur elle-même ;
b) et chauffer ce composite précurseur, dans des conditions telles qu'il se forme une dispersion en colonnes de l'argile expansée au sein d'une matrice carbonisée.

7. Procédé conforme à la revendication 6, dans lequel la matrice est un agent gélifiant dont la constante diélectrique vaut au moins 5.

8. Procédé conforme à la revendication 7, dans lequel l'agent gélifiant est une solution aqueuse d'un ou de plusieurs solide(s) choisi(s) dans l'ensemble formé par les amidons, cyclodextrines, gélatines, éthers de cellulose et sucres.

9. Procédé conforme à la revendication 8, dans lequel l'agent gélifiant est une solution aqueuse d'un amidon.

10. Procédé conforme à la revendication 6, dans lequel la matrice est un polymère choisi dans l'ensemble formé par les polyéthers-polyols et les poly(oxyalkylène).

11. Procédé conforme à la revendication 6, qui comporte en outre, après l'étape (b), une étape (c) où l'on broie le composite pour en faire une dispersion en colonnes d'argile expansée au sein d'une matrice carbonisée, en particules de taille micrométrique ou sub-micrométrique.

12. Procédé conforme à la revendication 11, qui comporte en outre, après l'étape (c), une étape où l'on chauffe la dispersion en colonnes à une température suffisante pour que la matrice carbonisée s'élimine par combustion et qu'il se forme ainsi une mousse de céramique poreuse.

13. Procédé conforme à la revendication 6, dans lequel, dans l'étape (b), on chauffe le composite précurseur à une température qui vaut au moins 300 °C, mais au plus 600 °C.

14. Procédé conforme à la revendication 7, dans lequel on chauffe le composite précurseur dans des conditions telles qu'il y ait une perte de poids, d'au moins environ 50 % et d'au plus environ 90 % en poids, de la matière organique carbonisable de l'agent gélifiant.

15. Procédé conforme à la revendication 11, qui comporte en outre, après l'étape (c), une étape où l'on dissout l'argile dans un solvant de l'argile et l'on extrait du composite au moins une certaine quantité d'argile, pour former une matrice composite carbonisée poreuse.

16. Procédé conforme à la revendication 15, dans lequel le solvant est acide et dans lequel l'argile contient au moins une argile qui peut être attaquée par un acide et au moins une argile qui résiste à une attaque d'un acide.

17. Procédé conforme à la revendication 16, dans lequel ladite argile, au nombre d'au moins une, qui peut être attaquée par un acide est choisie dans l'ensemble formé par les saponites, hectorites, fluoromicas et fluorohectorites, et ladite argile, au nombre d'au moins une, qui résiste à une attaque d'un acide est choisie dans l'ensemble formé par les montmorillonites et magadiites.

18. Procédé conforme à la revendication 17, qui comporte une étape où l'on disperse la matrice carbonisée poreuse dans un polymère.

19. Procédé conforme à la revendication 6, dans lequel l'argile renferme au moins une argile à faible rapport de forme, dont le rapport de forme se situe dans la gamme allant à peu près de 10/1 à 50/1, et au moins une argile multilamellaire à fort rapport de forme, dont le rapport de forme se situe dans la gamme allant à peu près de 100/1 à 1000/1.

20. Procédé conforme à la revendication 19, dans lequel l'argile à faible rapport de forme est choisie dans l'ensemble formé par les hectorites et saponites, et l'argile à fort rapport de forme est choisie dans l'ensemble formé par les montmorillonites, fluoromicas, fluorohectorites et magadiites.
